# EUROPÄISCHE PATENTSCHRIFT

(11) **EP 0 604 362 B1**
(45) Veröffentlichungstag und Bekanntmachung des Hinweises auf die Patenterteilung: **23.10.1996**
(21) Anmeldenummer: 93810849.5
(22) Anmeldetag: 03.12.1993
(51) Int. Cl.: B23B 51/04, E21B 17/042

(54) **Bohreinheit mit Hohlbohrkrone und Adapter**
Drill unit with tubular head and connector
Unité de forage avec tête tubulaire et connecteur

(30) Priorität: 19.12.1992 DE 4243151
(43) Veröffentlichungstag der Anmeldung: 29.06.1994
(73) Patentinhaber: HILTI Aktiengesellschaft, 9494 Schaan (LI)
(72) Erfinder: Kleine, Werner, Dipl.-Ing., D-28832 Achim (DE); Schmidt, Wolfram, D-28832 Achim (DE)
(74) Vertreter: Wildi, Roland

(56) Entgegenhaltungen:
- DE-A- 2 033 936
- GB-A- 2 104 808
- US-A- 2 181 343

## Beschreibung

Die Erfindung betrifft eine Bohreinheit mit Hohlbohrkrone, die bohrrichtungsseitig Schneiden aufweist und der Aufnehme in einem Antriebsgerät dienendem Adapter, wobei zur gegenseitigen Verbindung die Hohlbohrkrone ein Innengewinde und der Adapter ein Aussengewinde trägt, wobei Innen- und Aussengewinde plane Flankenbereich aufweisen und Innen- und Aussendurchmesser des Innengewindes der Hohlbohrkrone die Innen- und Aussendurchmesser des Aussengewindes des Adapters übersteigen.

Hohlbohrkronen der eingangs genannten Art werden in Verbindung mit Antriebsgeräten betrieben, welche den Hohlbohrkronen zumindest eine Drehbewegung und in den meisten Fällen auch eine Schlagbewegung erteilen. Zum Einsetzen in solche Antriebsgeräte dienen Adapter, welche ein auf das jeweilig zum Einsatz gelangende Antriebsgerät abgestimmtes Einsteckende aufweisen.

Insbesondere aus logistischen Gründen sind die Hohlbohrkronen in aller Regel über lösbare Verbindungen mit den Adaptern verbindbar. Dadurch besteht die Möglichkeit, für das jeweilige Antriebsgerät selbst bei unterschiedlichen Grössen der Anwendung findenden Hohlbohrkronen nur einen Adapter zur Verfügung steilen zu müssen. Darüber hinaus werden dadurch auch wirtschaftliche Vorteile erreicht, da die Adapter eine ausserordentlich lange Lebensdauer aufweisen, während es sich bei den Hohlbohrkronen um Verschleiss ausgesetzte Verbrauchsteile handelt.

Aus der GB-A-2 104 808, die dem Oberbegriff des Patentanspruchs 1 entspricht, ist eine lösbare Verbindung zwischen Adapter und Hohlbohrkrone in Form einer Gewindeverbindung bekannt wobei es üblich ist, den Adapter mit einem Aussengewinde und die Hohlbohrkrone mit einem Innengewinde zu versehen.

Das Innengewinde der Bohrkrone und das Aussengewinde des Adapters weisen plane Flankenbereich auf und die Innen- und Aussendurchmesser des Innengewindes der Hohlbohrkrone übersteigen die Innen- und Aussendurchmesser des Aussengewindes des Adapters.

Aufgrund der festigkeitsmässigen Dimensionierung bietet sich als Gewindeform ein Trapezgewinde an. Allerdings hat sich gezeigt, dass ein solches Trapezgewinde aufgrund der entstehenden Kerbwirkungen den auftretenden Belastungsanforderungen nicht in jeglicher Hinsicht gewachsen ist, so dass vermehrt auf ein Rundgewinde übergegangen wurde, wie dies beispeisweise aus dem DE-GM 82 23 603 bekannt ist. Ein solches Rundgewinde hat den Vorteil, dass es eine hohe Dauerwechselfestigkeit aufweist und überdies gegen mechanische Beschädlgungen relativ unempfindlich ist. Nachteilig bei einem solchen Rundgewinde ist die reine Linienberührung, die zu einer so hohen Flächenpressung führt, dass selbst bei völlig sauberem Gewinde die Leichtgängigkeit und dabei die Lösbarkeit erheblich beeinträchtigt ist.

Bei beiden bekannten Gewindearten tritt aber in gleichem Masse der Nachteil auf, dass sie gegen Verschmutzungen relativ empfindlich sind. Bei den hier zur Diskussion stehenden Hohlbohrkronen können solche Verschmutzungen sowohl während des Betriebes als auch während des Zusammenbaus entstehen. Die Folge davon ist eine Einbusse der Leichtgängigkeit des Gewindes, was dazu führt, dass Adapter und Hohlbohrkrone ohne besonderen Werkzeugaufwand nicht mehr voneinander trennbar sind.

Der Erfindung liegt die Aufgabe zugrunde, bei einer Bohreinheit, bestehend aus Hohlbohrkrone und Adapter, eine hohen Belastungsanforderungen gerecht werdende Gewindeverbindung zu schaffen, welche trotz äusseren Einflüssen, wie insbesondere mechanische Einwirklungen und Verschmutzungen, eine Leichtgängigkeit gewährleistet.

Erfindungsgemäss wird die Aufgabe dadurch gelöst, dass auf beiden Seiten die korrespondierenden Flankenbereiche der Gewinde zu einer Senkrechten zur Bohrachse einen Winkel von etwa 45° aufweisen.

Die planen Flankenbereiche führen zu einer kleinen Flächenpressung der Gewinde, so dass dadurch die Leichtgängigkeit gefördert wird. Darüber hinaus führt die Durchmesserabstimmung der Gewinde dazu, dass sich zwischen den Gewinden im wesentlichen S-förmige Taschen bilden. Diese Taschen treten
je nach Belastungsfall wechselweise im Bereich jener Flanken auf, welche der Belastungsrichtung abgewandt liegen.

Die Bildung der Taschen hat den Vorteil, dass darin Verschmutzungen in Form von Bohrgut aufgenommen werden können. Solche Verschmutzungen sind bei den hier zur Diskussion stehenden Anwendungsbereichen unvermeidlich, so dass gerade in dieser Hinsicht weitere wesentliche Vorteile durch die bevorzugte Gewindedimensionierung erzielt werden. Ein wesentlicher dieser Vorteile besteht darin, dass trotz Verschmutzung sowohl von Aussen- als auch von Innengewinde eine Leichtgängigkeit der Gewindeverbindung gewährleistet bleibt. Darüber hinaus kann sich in den Bereichen zwischen den Gewinden während des Betriebes kein Bohrgut festsetzen, da dieses durch die beim Betrieb entstehenden Erschütterungen durch die Taschen hindurch weggeleitet wird.

Solange ein Drehmoment angreift, stossen die jeweils in Belastungsrichtung liegenden Flanken der Gewinde mit ihren planen Flankenbereichen aneinander. In diesem Zustand wird die Schlagenergie optimal vom Adapter auf die Hohlbohrkrone übertragen. Die Taschen werden damit von den gegenüberliegenden Flanken gebildet, so dass in diesen Flankenbereichen Spiel vorhanden ist, was den Vorteil hat, dass nur geringe Anteile an Stosswellen reflektiert werden. Sobald kein Drehmoment mehr vorhanden ist, pendelt sich das Spiel zwischen den Gewinden ein. Dadurch kann bei Aufgabe des einwirkenden Drehmomentes und lediglichem Einwirken von Leerschlägen eine leichte bis nahezu selbsttätige Lösung zwischen Hohlbohrkrone und Adapter erfolgen. Ein spezieller Werkzeugaufwand zum Lösen dieser beiden Teile voneinander ist damit nicht erforderlich. Im einzelnen kann das Lösen dadurch erfolgen, dass nach Aufgabe des Drehmomentes, beispielsweise durch Herausziehen der Hohlbohrkrone aus der Bohrung, noch ein paar Leerschläge zusätzlich aufgebracht werden. Dadurchwird das vorerwähnte Spiel in gleichmässiger Weise verteilt und die Flächenpressung in den in Belastungsrichtung liegenden Flankenbereichen aufgehoben, so dass Hohlbohrkrone und Adapter voneinander gelöst werden können.

Die korrespondierenden Flankenbereiche der Gewinde weisen auf beiden Seiten zu einer Senkrechten zur Bohrachse einen Winkel von etwa 45° auf. Dadurch werden einfach herstellbare symmetrische Gewinde geschaffen.

Zweckmässigerweise weisen die Gewinde einen Steigungswinkel von 8° bis 8° 30' auf. Mit einem Steigungswinkel, der sich innerhalb dieses Bereiches bewegt, können die an die Gewinde gestellten Anforderungen optimal gelöst werden.

In bevorzugter Weise sind Innen- und Aussengewinde Trapezgewinde, deren Innendurchmesser und Aussendurchmesser von rundgewindeartigen Bereichen begrenzt sind. Es entsteht damit in gewisser Annäherung eine Kombination von Trapez- und Rundgewinde. Während der Wurzelbereich der Gewinde bis hin zu den Flankenbereichen als Trapezgewinde ausgebildet ist, wird die Spitze von rundgewindeartigen Bereichen gebildet. Dadurch wird einerseits von den festigkeitsmässigen Vorteilen eines Trapezgewindes Gebrauch gemacht und andererseits werden durch die rundgewindeartigen Bereiche die Vorteile eines Rundgewindes ausgenutzt, indem dank Vermeidung von Kerbwirkungen die Rundgewinden eigene, hohe Dauerwechselfestigkeit beibehalten wird.

Nebst den geringeren Anforderungen an Gewindereinigung vor dem Zusammensetzen der Bohreinheit wird weiterhin gewährleistet, dass die Gewindeverbindung weitgehend beschädigungsunanfällig ist, was insbesondere auf die rundgewindeartigen Bereiche zurückzuführen ist.

Im Hinblick auf die Gewindeherstellung und die Bildung der Taschen zwischen den Gewinden wirkt es sich vorteilhaft aus, wenn die von den rundgewindeartigen Bereichen begrenzten Aussendurchmesser des Innengewindes der Hohlbohrkrone und die von den rundgewindeartigen Bereichen begrenzten Innendurchmesser des Aussengewindes des Adapters kleinere Radien aufweisen, als die von den rundgewindeartigen Bereichen begrenzten Innendurchmesser des Innengewindes der Hohlbohrkrone und die von den rundgewindeartigen Bereichen begrenzten Aussendurchmesser des Aussengewindes des Adapters.

In dimensionsmässiger Hinsicht kann eine Bohreinheit entsprechend vorliegender Erfindung im Zusammenhang mit der Gewindeverbindung beispielsweise folgende Masse aufweisen:

| | |
|---|---|
| Aussendurchmesser Innengewinde: | 26,5 mm |
| Innendurchmesser Innengewinde: | 23,5 mm |
| Radius Innengewinde-Tal: | 2,0 mm |
| Radius Innengewinde-Berg: | 2,2 mm |
| Aussendurchmesser Aussengewinde: | 26,0 mm |
| Innendurchmesser Aussengewinde: | 23,0 mm |
| Radius Aussengewinde-Tal: | 2,0 mm |
| Radius Aussengewinde-Berg: | 2,2 mm |

Die Erfindung wird nachstehend anhand von Zeichnungen, welche ein Ausführungsbeispiel wiedergeben, näher erläutert. Es zeigen:
- Fig. 1: eine Bohreinheit, teilweise im Längsschnitt dargestellt;
- Fig. 2: einen Ausschnitt von Aussen- und Innengewinde in vergrösserter Darstellung.

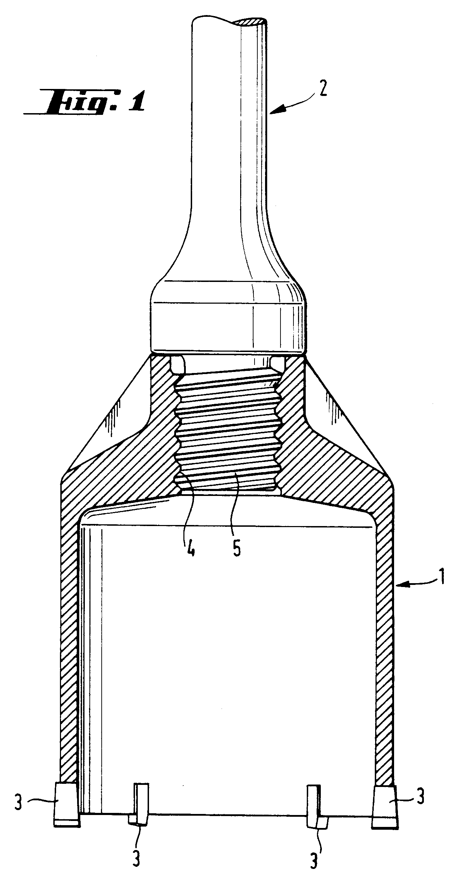

Die Bohreinheit der Fig. 1 besteht aus Hohlbohrkrone 1 und Adapter 2. Bohrrichtungsseitig weist die Hohlbohrkrone 1 Schneiden 3 auf. Das der Bohrrichtung abgewandte Ende der Hohlbohrkrone 1 ist mit einem Verbindungsmittel in Form eines Innengewindes 4 versehen. Der Adapter 2 weist an seinem bohrrichtungsseitigen Ende ein Aussengewinde 5 auf, welches mit dem Innengewinde 4 der Hohlbohrkrone 1 korrespondiert.

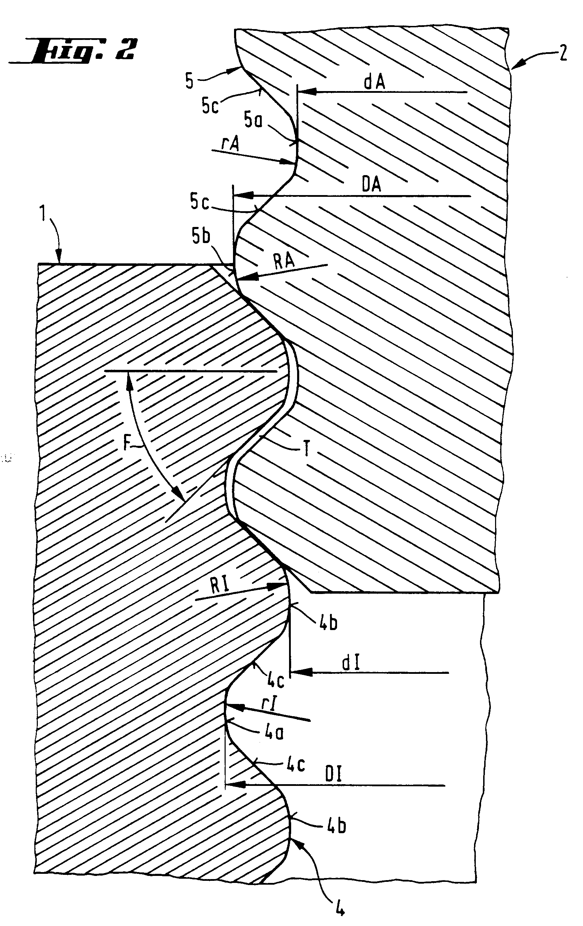

Details des Innengewindes 4 und des Aussengewindes 5 sind der Fig. 2 entnehmbar. Dabei zeigt sich, wie das Innengewinde 4 als Trapezgewinde mit planen Flankenbereichen 4c ausgebildet ist, dessen Innendurchmesser dI von rundgewindeartigen Bereichen 4b und dessen Aussendurchmesser DI von rundgewindeartigen Bereichen 4a begrenzt ist. Das Aussengewinde 5 weist plane Flankenbereiche 5c auf, wobei der Aussendurchmesser DA von rundgewindeartigen Bereichen 5b und der Innendurchmesser dA von rundgewindeartigen Bereichen 5a begrenzt ist.

An die planen Flankenbereiche 4c des Innengewindes 4 schliessen sich talseitig die von einem Radius rI gebildeten rundgewindeartigen Bereiche 4a und bergseitig die von einem Radius RI gebildeten rundgewindeartigen Bereiche 4b an. Beim Aussengewinde 5 des Adapters 2 schliessen sich bergseitig an die planen Flankenbereiche 5c die von einem Radius RA gebildeten rundgewindeartigen Bereiche 5b und talseitig die von einem Radius rA gebildeten rundgewindeartigen Bereiche 5a an.

Wie insbesondere der überlappende Bereich von Innengewinde 4 und Aussengewinde 5 zeigt, sind Aussendurchmesser DI und Innendurchmesser dI des Innengewindes 4 grösser als Aussendurchmesser DA und Innendurchmesser dA des Aussengewindes 5. Aufgrund der Durchmesserdifferenzen bilden sich zwischen Innengewinde 4 und Aussengewinde 5 S-förmige Taschen T und zwar zwischen den der jeweiligen Belastungsrichtung abgewandten planen Flankenbereiche 4c, 5c, die zu einer Senkrechten zur Bohrachse einen Winkel F von etwa 45° aufweisen. Bei einer Umkehr der Belastungsrichtung wechseln die Taschen T und werden von den gegenüberliegenden planen Flankenbereichen 4c, 5c eingeschlossen.

## Patentansprüche

1. Bohreinheit mit Hohlbohrkrone (1), die bohrrichtungsseitig Schneiden (3) aufweist und der Aufnahme in einem Antriebsgerät dienendem Adapter (2), wobei zur gegenseitigen Verbindung die Hohlbohrkrone (1) ein Innengewinde (4) und der Adapter (2) eine Aussengewinde (5) trägt, wobei Innen- und Aussengewinde (4, 5) plane Flankenbereiche (4c, 5c) aufweisen und Innen- und Aussendurchmesser (DI, di) des Innengewindes (4) der Hohlbohrkrone (1) die Innen- und Aussendurchmesser (DA, dA) des Aussengewindes (5) des Adapters (2) übersteigen, dadurch gekennzeichnet, dass auf beiden Seiten die korrespondierenden Flankenbereiche (4c, 5c) der Gewinde (4, 5) zu einer Senkrechten zur Bohrachse einen Winkel (F) von etwa 45° aufweisen.

2. Bohreinheit nach Anspruch 1, dadurch gekennzeichnet, dass die Gewinde (4, 5) einen Steigungswinkel von 8° bis 8° 30'aufweisen.

3. Bohreinheit nach Anspruch 1 oder 2, dadurch gekennzeichnet, dass Innen- und Aussengewinde (4, 5) Trapezgewinde sind, deren Innendurchmesser (dI, dA) und Aussendurchmesser (DI, DA) von rundgewindeartigen Bereichen (4a, 4b, 5a, 5b) begrenzt sind.

4. Bohreinheit nach Anspruch 3, dadurch gekennzeichnet, dass die von den rundgewindeartigen Bereichen (4a) begrenzten Aussendurchmesser (DI) des Innengewindes (4) der Hohlbohrkrone (1) und die von den rundgewindeartigen Bereichen (5a) begrenzten Innendurchmesser (dA) des Aussengewindes (5) des Adapters (2) kleinere Radien (rI, rA) als die von den rundgewindeartigen Bereichen (4b) begrenzten Innendurchmesser (dI) des Innengewindes (4) der Hohlbohrkrone (1) und die von den rundgewindeartigen Bereichen (5b) begrenzten Aussendurchmesser (DA) des Aussengewindes (5) des Adapters (2) aufweisen.

## Claims

1. Drill unit with tubular drillhead (1) having cutters (3) in the drilling direction and an adapter (2) for accommodation in a drive unit, and the tubular drillhead (1) is provided with an internal thread (4) and the adapter (2) with an external thread serving to interconnect them, and the internal and external threads (4, 5) have plane flank areas (4c, 5c), and the inside and outside diameters (DI, di) of the internal thread (4) of the tubular drillhead (1) exceed the inside and outside diameters (DA, dA) of the external thread (5) of the adapter (2), **characterised in that** the corresponding flank areas (4c, 5c) of the threads (4, 5) are on both sides at an angle (F) of approximately 45° to a vertical of the drill axis.

2. Drill unit according to Claim 1, **characterised in that** the threads (4, 5) are at an inclination angle of between 8° and 8°30'.

3. Drill unit according to Claim 1 or 2, **characterised in that** internal and external threads (4, 5) are tapered threads the inside diameter (dI, dA) and outside diameter (DI, DA) of which are defined by rounded thread areas (4a, 4b, 5a, 5b).

4. Drill unit according to Claim 3, **characterised in that** the outside diameters (DI) of the internal thread (4) of the hollow drillhead as defined by the rounded thread areas (4a) and the inside diameters (dA) of the external thread (5a) of the adapter (2) as defined by the rounded thread areas (5a) have smaller radii (rI, rA) than the inside diameters (dI) of the internal thread (4) of the tubular drillhead (1) as defined by the rounded thread areas (4b) and the outside diameters (DA) of the external thread (5) of the adapter (2) as defined by the rounded thread areas (5b).

## Revendications

1. Unité de forage avec tête tubulaire (1) présentant, du côté forage, des tranchants (3) et portant un connecteur (2) servant à la fixation dans un appareil d'entraînement, la tête tubulaire (1) portant pour l'accouplement mutuel un filetage intérieur (4) et le connecteur (2) étant muni d'un filetage extérieur (5), les filetages intérieur et extérieur (4, 5) présentant des sections de flancs planes (4c, 5c) et les diamètres intérieur et extérieur (DI, di) du filetage intérieur (4) de la tête tubulaire (1) étant supérieurs aux diamètres intérieur et extérieur (DA, da) du filetage extérieur (5) du connecteur (2), **caractérisée en** ce que sur les deux côtés les sections de flancs correspondantes (4c, 5c) des filetages (4, 5) forment avec une perpendiculaire à l'axe de forage un angle (F) d'environ 45°.

2. Unité de forage selon la revendication 1, caractérisée en ce que les filetages (4, 5) présentent un angle d'inclinaison de 8° à 8°30'.

3. Unité de forage selon la revendication 1 ou 2, caractérisée en ce que les filetages intérieur et extérieur (4, 5) sont des filetages trapézoïdaux dont le diamètre intérieur (dI, dA) et le diamètre extérieur (DI, DA) sont délimités par des sections de type filet rond (4a, 4b, 5a, 5b).

4. Unité de forage selon la revendication 3, caractérisée en ce que les diamètres extérieurs (DI) du filetage intérieur (4) de la tête tubulaire (1) délimités par les sections de type filet rond (4a), et les diamètres intérieurs (dA) du filetage extérieur (5) du connecteur (2) délimités par les sections de type filet rond (5a) ont des rayons (rI, rA) inférieurs à ceux des diamètres intérieurs (dI) du filetage intérieur (4) de la tête tubulaire (1) délimités par les sections de type filet rond (4b) et des diamètres extérieurs (DA) du filetage extérieur (5) du connecteur (2) délimités par les sections de type filet rond (5b).
